# EUROPEAN PATENT APPLICATION

(11) **EP 1 940 163 A2**
(43) Date of publication of application: **02.07.2008**
(21) Application number: 07122182.4
(22) Date of filing: 03.12.2007
(51) Int. Cl.: H04N 5/64, G12B 9/04

(54) **Waterproof display device for bathrooms**

(30) Priority: 27.12.2006 CN 200620144434 U
(71) Applicant: Hocheng Corporation, Zhongshan Dist., 104 Taipei (CN)
(72) Inventor: Lin, Chun-Hui, 104, Taipei (TW)
(74) Representative: Beck & Rössig European Patent Attorneys

(57) **Abstract**

A display is waterproof to be used in a bathroom. The display is installed on a wall of the bathroom for entertainment. Or, when the display is turned off, a glass is shown. Thus, the bathroom space is highly utilized and the bathroom is beautified.

## Description

### Field of the invention

The present invention relates to a display; more particularly, relates to installing a display device on a wall of a bathroom to be a display and a mirror with a waterproof function for fully utilizing the space and beautifying the bathroom.

### Description of the Related Art

A bathroom is traditionally designed for bathing and washing only, so that it usually contains a showering device, a stool, a bathtub and a washing basin. Yet, in the modern days, life pressure is high. So, people like to take a bath to release their pressure. But, they usually can just close their eyes or stare at the ceiling without being fully relaxed.

Hence, an audio-video device is installed in some bathroom. People can use the audio-video equipment on taking baths to be fully relaxed. On installing the audio-video device, at first, a containing space is usually formed in the wall by digging. Then a display is put into the containing space and a transparent glass is covered on the containing space. In this way, an audio-video device is provided to people to be used when they are taking baths.

However, the containing space must be obtained at first by digging in the wall. This makes the installation become difficult. And the digging may ruin the wall. In addition, if the wall is made of wood or something vapor-permeable, vapor may enter into the containing space and make the audio-video device not workable. Hence, the prior art does not fulfill users' requests on actual use.

### Summary of the invention

The main purpose of the present invention is to install a display device on a wall of a bathroom to be a display and a mirror with a waterproof function for fully utilizing the space and beautifying the bathroom.

To achieve the above purpose, the present invention is a waterproof display device used in a bathroom, comprising a shell having a containing space with a hollow hole and a wire hole both penetrating to the containing space on two surfaces of the shell; a display in the containing space; a glass layer capable of being used as a mirror in the hollow hole corresponding to the display; and a waterproof layer pasted in the containing space and extended out to a connecting place of the hollow hole and the glass layer, where the waterproof layer can be replaced with a plastic waterproof bag coated on the display. Accordingly, a novel waterproof display device used in a bathroom is obtained.

### Brief descriptions of the drawings

The present invention will be better understood from the following detailed descriptions of the preferred embodiments according to the present invention, taken in conjunction with the accompanying drawings, in which
FIG.1 is the perspective view showing the first preferred embodiment according to the present invention;
FIG.2 is the explosive view of the first preferred embodiment;
FIG.3 is the sectional view of the first preferred embodiment;
FIG.4 is the perspective view showing the state of use of the first preferred embodiment;
FIG.5 is the sectional view showing the state of use of the first preferred embodiment;
FIG.6 is the perspective view showing the second preferred embodiment;
FIG.7 is the explosive view of the second preferred embodiment; and
FIG.8 is the sectional view showing the state of use of the second preferred embodiment.

### Descriptions of the preferred embodiments

The following descriptions of the preferred embodiments are provided to understand the features and the structures of the present invention.

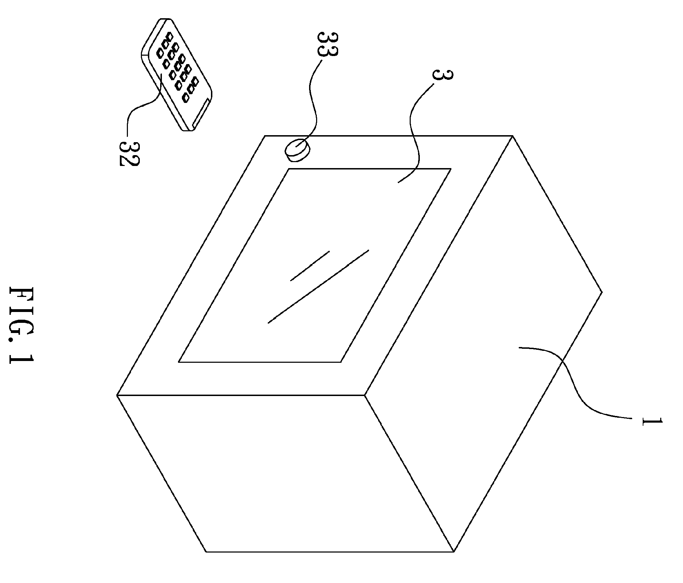

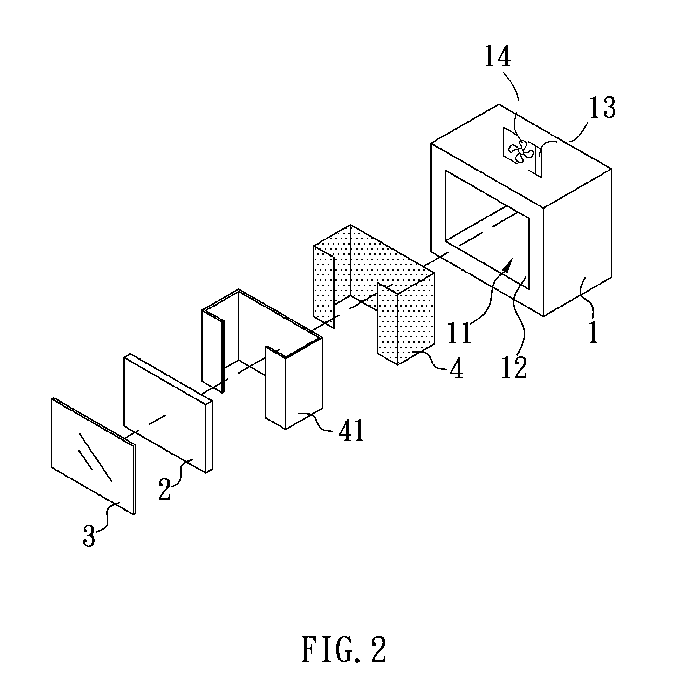

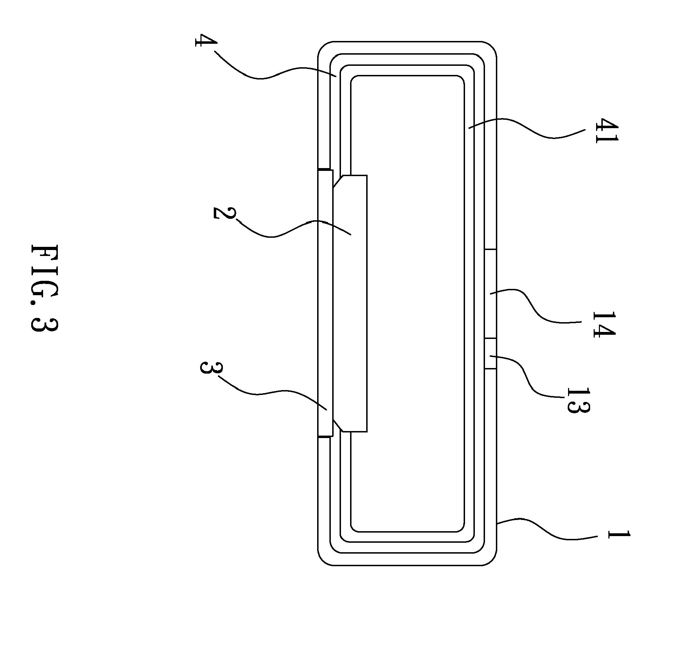

Please refer to FIG.1 to FIG.3, which are a perspective view, an explosive view and a sectional view showing the first preferred embodiment according to the present invention. As shown in the figures, the present invention is a waterproof display device used in a bathroom, comprising a shell 1, a display 2, a glass layer 3 and a waterproof layer 4, where the present invention is installed on a wall in a bathroom to be a display and a mirror with a waterproof function; and the present invention fully utilizes space and thus beautifies the bathroom.

The shell 1 has a containing space 11; two surfaces of the shell 1 separately have a hollow hole 12 and a wire hole 13 both penetrating to the containing space 11; and, a fan 14 is located at the wire hole 13.

The display 2 is located in the containing space 11 and is corresponding to the hollow hole 12; and the display 2 is a thin film transistor (TFT) liquid crystal display (LCD).

The glass layer 3 is located in the hollow hole 12 and is corresponding to the display; and the glass layer 3 is plated with an inorganic coating material to be a mirror.

The waterproof layer 4 is made of a waterproof ventilative fabric; and is located in the containing space 11 and is extended out to a connecting place of the hollow hole 12 and the glass layer 3. The waterproof layer 4 is pasted on in the containing space 11; and is coordinated with a fixing frame 41. Thus, a novel waterproof display device used in a bathroom is obtained.

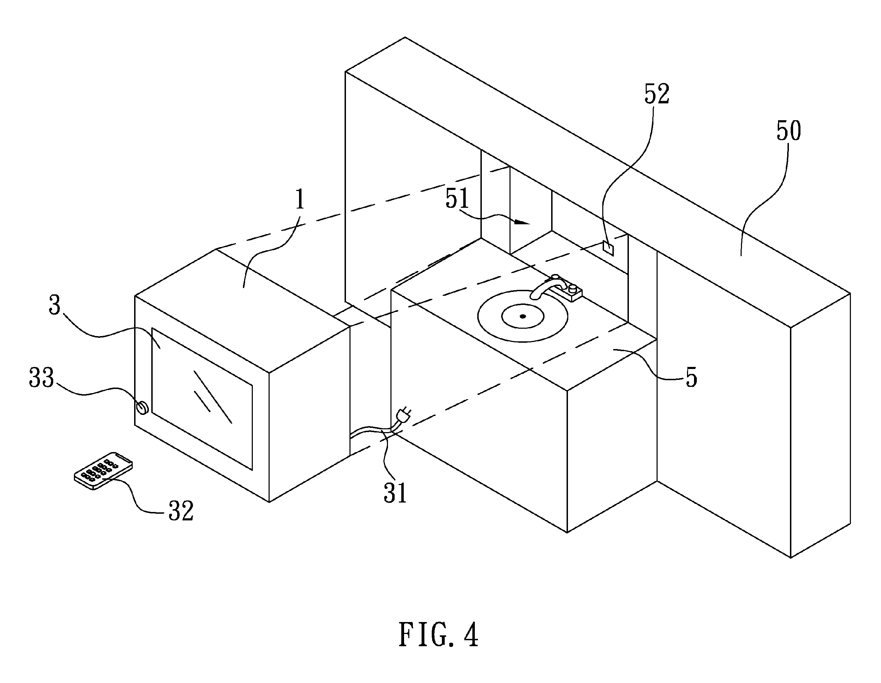

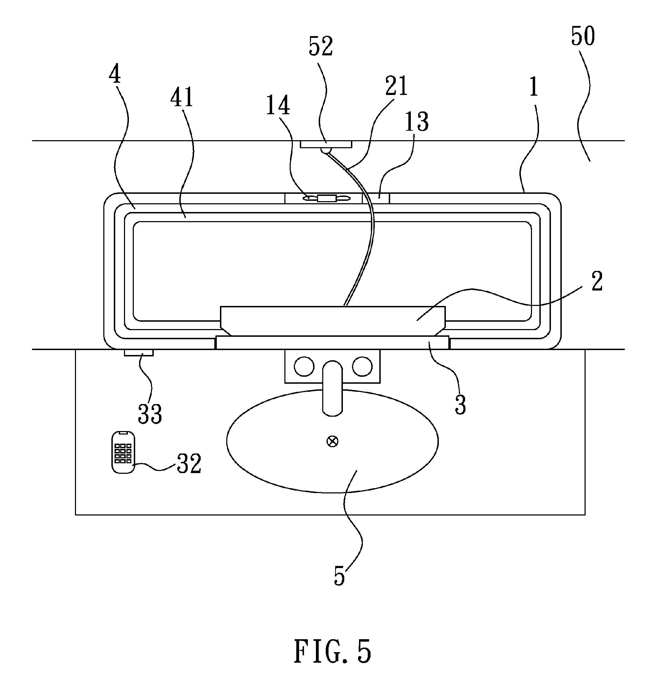

Please refer to FIG.4 and FIG.5, which are a perspective view and a sectional view showing a state of use of the first preferred embodiment. As shown in the figures, when assembling the present invention, a display 2, a glass layer 3 and a waterproof layer 4 are put in a containing space 11 of a shell 1; a power line 21 of the display 2 penetrates through a wire hole 13; the shell 1 is installed on a wall 50 above a washing basin 5; the power line 21 of the display 2 is connected with a power source 52 in the container hole 51; and, the connecting place between the shell 1 and the container hole 51 is waterproof. Thus, the present invention is assembled.

When using the present invention, the display 2 is controlled by a wireless remote controller 32 or a wire switch controller 33 to display a screen through the glass layer 3. Hence, an audio-video entertainment is available through the display 2. And a fan at the wire hole 13 exhausts out hot air produced on using the display 2. On the other hand, when the display 2 is not used, the display 2 is shut down by the remote controller 32 or the switch controller 32 to become opaque; and, therefore, the glass layer 3 can be used as a glass above the washing basin 5.

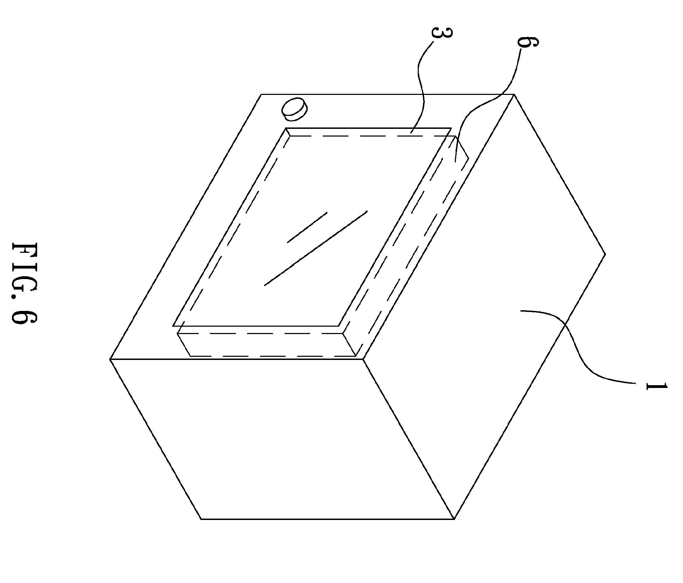

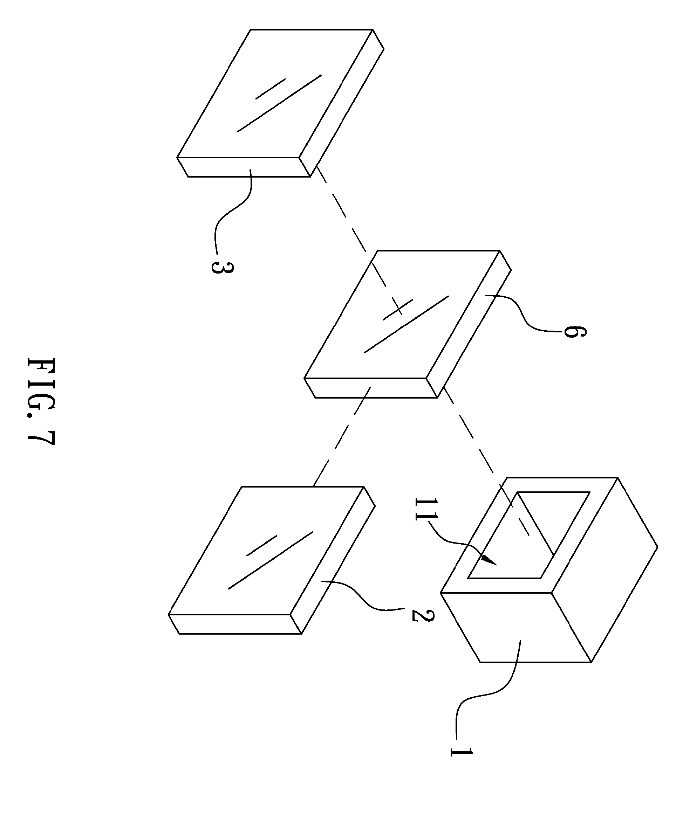

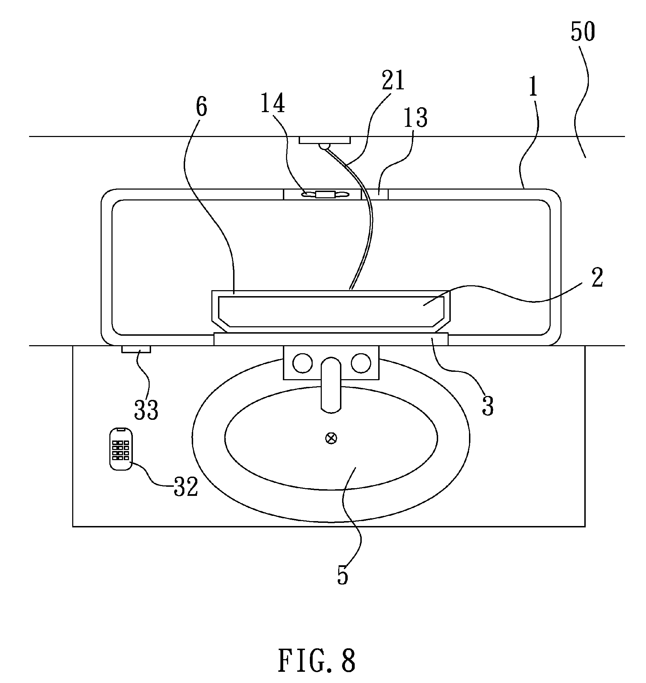

Please refer to FIG.6, FIG.7 and FIG.8, which are a perspective view showing the second preferred embodiment and an explosive view and a sectional view showing a state of use of the second preferred embodiment. As shown in the figures, a display 2 of a second preferred embodiment is coated with a transparent plastic waterproof bag 6; then the display 2 coated with the plastic waterproof bag 6 is put into a containing space 11; and, then, a glass layer 3 is put in the hollow hole 12. What follows then is that the shell 1 is installed on a wall 50 of a washing basin 5.

On using the second preferred embodiment, the display 2 is controlled by a wireless remote controller 32 or a wire switch controller 33 to display a screen through the glass layer 3. Hence, an audio-video entertainment is available through the display 2. And a fan at the wire hole 13 exhausts out hot air produced on using the display 2. Or, the glass layer 3 can be used as a glass above the washing basin 5.

Another waterproof display device for use in a bathroom, comprises a shell having a containing space, a display being located in said containing space and having a hollow hole and a wire hole both penetrating to said containing space at two surfaces of said shell separately, and a glass layer located in said hollow hole. The display corresponds to said hollow hole and preferably is a TFT LCD. A plastic waterproof bag is coated on said display. Preferably, said plastic waterproof bag is transparent. The glass layer corresponds to said display and is plated with an inorganic coating material.

Preferably, a fan is located at said wire hole.

Preferably the display has a wireless remote controller.

Preferably the display has a wire switch controller.

To sum up, the present invention is a waterproof display device used in a bathroom, where the present is installed on a wall in a bathroom to be a display and a mirror; and space in the bathroom is highly utilized with the present invention and the bathroom is beautified.

The preferred embodiments herein disclosed are not intended to unnecessarily limit the scope of the invention. Therefore, simple modifications or variations belonging to the equivalent of the scope of the claims and the instructions disclosed herein for a patent are all within the scope of the present invention.

## Claims

1. A waterproof display device used in a bathroom, comprising:
- a shell, said shell having a containing space, said shell having a hollow hole and a wire hole both penetrating to said containing space at two surfaces of said shell separately;
- a display, said display being located in said containing space, said display being corresponding to said hollow hole;
- a glass layer, said glass layer being located in said hollow hole, said glass layer being corresponding to said screen, said glass layer being plated with an inorganic coating material; and
- a waterproof layer, said waterproof layer being located in said containing space, said waterproof layer being extended out to a connecting place of said hollow hole and said glass layer.

2. The display according to claim 1, wherein a fan is located at said wire hole.

3. The display according to claim 1 or 2, wherein said display is a thin film transistor (TFT) liquid crystal display (LCD).

4. The display according to one of claims 1 to 3, wherein said display has a wireless remote controller.

5. The display according to one of claims 1 to 4, wherein said display has a wire switch controller.

6. The display according to one of claims 1 to 5, wherein said waterproof layer is made of a waterproof ventilative fabric.

7. The display according to one of claims 1 to 6, wherein said waterproof layer is pasted on in said containing space and on said connecting place of said hollow hole and said glass layer.

8. The display according to one of claims 1 to 7, wherein said waterproof layer is coordinated with a fixing frame to be deposed on in said containing space and to be extended out to said connecting place of said hollow hole and said glass layer.

9. A waterproof display device used in a bathroom, comprising:
- a shell, said shell having a containing space, said shell having a hollow hole and a wire hole both penetrating to said containing space at two surfaces of said shell separately;
- a display, said display being located in said containing space, said display being corresponding to said hollow hole;
- a plastic waterproof bag, said plastic waterproof bag being coated on said display; and
- a glass layer, said glass layer being located in said hollow hole, said glass layer being corresponding to said display, said glass layer being plated with an inorganic coating material.

10. The display according to claim 9, wherein a fan is located at said wire hole.

11. The display according to claim 9 or 10, wherein said display is a TFT LCD.

12. The display according to one of claims 9 to 11, wherein said plastic waterproof bag is transparent.

13. The display according to one of claims 9 to 12, wherein said display has a wireless remote controller.

14. The display according to one of claims 9 to 13, wherein said display has a wire switch controller.
